# EUROPEAN PATENT APPLICATION

(11) **EP 4 661 532 A1**
(43) Date of publication of application: **10.12.2025**
(21) Application number: 24777937.4
(22) Date of filing: 22.03.2024
(51) Int. Cl.: H04W 68/02, H04W 76/28

(54) **COMMUNICATION METHOD AND APPARATUS**

(30) Priority: 24.03.2023 CN 202310357788
(71) Applicant: Huawei Technologies Co., Ltd., Shenzhen, Guangdong 518129 (CN)
(72) Inventor: XIANG, Hongyu, Shenzhen, Guangdong 518129 (CN); CHEN, Lei, Shenzhen, Guangdong 518129 (CN); PAN, Qi, Shenzhen, Guangdong 518129 (CN)
(74) Representative: MERH-IP Matias Erny Reichl Hoffmann Patentanwälte PartG mbB
(86) International application number: PCT/CN2024/083393
(87) International publication number: WO 2024/199148

(57) **Abstract**

This application relates to the communication field, and discloses a communication method and apparatus. The method includes: A first access network device receives, from a terminal device, information used to request to resume an RRC connection, where an inactive-state paging cycle of the terminal device is a first paging cycle; sends first information to the terminal device or a second access network device, where the first information is used to configure the inactive-state paging cycle of the terminal device as a second paging cycle; and sends second information to a core network element, where the second information is used to start, cancel, or modify a mobile terminated communication handling policy of the terminal device. According to the foregoing method, the terminal device and the core network element can align updates of the inactive-state paging cycle of the terminal device without the terminal device entering a connected state.

## Description

### CROSS-REFERENCE TO RELATED APPLICATIONS

This application claims priority to Chinese Patent Application No. 202310357788.0, filed with the China National Intellectual Property Administration on March 24, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

To reduce power consumption of monitoring a paging message by a terminal device, an access network device may periodically send the paging message to the terminal device based on a paging cycle. Correspondingly, the terminal device may periodically receive the paging message based on the paging cycle. In other words, the terminal device may periodically detect a physical downlink control channel (physical downlink control channel, PDCCH).

An inactive-state paging cycle of the terminal device is used as an example. The inactive-state paging cycle of the terminal device may be a discontinuous reception (discontinuous reception, DRX) cycle or an inactive-state extended DRX cycle. To further reduce power consumption of the terminal device, enhanced inactive-state extended DRX is further introduced currently.

However, after the enhanced inactive-state extended DRX is introduced, how to update the inactive-state paging cycle of the terminal device still needs to be further studied.

### SUMMARY

This application provides a communication method and apparatus, to update an inactive-state paging cycle of a terminal device.

**According to a first aspect,** an embodiment of this application provides a communication method. The method may be applied to a first access network device or a component (for example, a circuit or a chip) in a first access network device. For example, the method is applied to the first access network device. In the method, the first access network device receives, from a terminal device, information used to request to resume a radio resource control RRC connection, where an inactive-state paging cycle of the terminal device is a first paging cycle; sends first information to the terminal device or a second access network device, where the first information is used to configure the inactive-state paging cycle of the terminal device as a second paging cycle; and sends second information to a core network element, where the second information is used to start, cancel, or modify a mobile terminated communication handling policy of the terminal device.

According to the foregoing method, when the terminal device initiates an RRC resume procedure, the first access network device may configure the inactive-state paging cycle for the terminal device, and send the second information to the core network element, to notify the core network element to update (or start, modify, or cancel) the mobile terminated communication handling policy of the terminal device. In this way, the terminal device and the core network element can align updates of the inactive-state paging cycle of the terminal device without the terminal device entering a connected state.

In a possible design, the method further includes: receiving third information from a third access network device, where the third information indicates the first paging cycle, or indicates that the first paging cycle is greater than a threshold.

In this way, the first access network device may obtain the first paging cycle (or learn that the first paging cycle is greater than the threshold), so that the first access network device can send the second information to the core network element in a targeted manner based on the first paging cycle (or the first paging cycle being greater than the threshold). For example, when the first paging cycle is less than or equal to the threshold, and the second paging cycle is less than or equal to the threshold, the first access network device may not need to send the second information to the core network element, to save communication resources.

In a possible design, the first information is carried in an RRC release message, and the RRC release message indicates that the terminal device is in an inactive state.

In a possible design, the second information is carried in a path switch request message.

In this way, the first access network device reuses the path switch request message to send the second information to the core network element, so that no additional signaling needs to be introduced, thereby saving signaling resources.

In a possible design, the first paging cycle is less than or equal to a threshold, the second paging cycle is greater than the threshold, and the second information is used to start the mobile terminated communication handling policy of the terminal device.

In a possible design, the first paging cycle is greater than the threshold, the second paging cycle is less than or equal to the threshold, and the second information is used to cancel the mobile terminated communication handling policy of the terminal device.

In a possible design, the first paging cycle is greater than the threshold, the second paging cycle is greater than the threshold, and the second information is used to modify the mobile terminated communication handling policy of the terminal device.

In a possible design, the second information includes the second paging cycle and/or indication information, where the indication information indicates an operation on the communication handling policy, and the operation includes starting, canceling, or modifying.

**According to a second aspect,** an embodiment of this application provides a communication method. The method may be applied to a first access network device or a component (for example, a circuit or a chip) in a first access network device. For example, the method is applied to the first access network device. In the method, the first access network device sends context information of a terminal device in an inactive state to a second access network device, where an inactive-state paging cycle of the terminal device is greater than a threshold; obtains capability information of the second access network device, where the capability information indicates that the second access network device does not support the paging cycle; and sends fourth information to a core network element, where the fourth information indicates to cancel a mobile terminated communication handling policy of the terminal device.

In a possible design, obtaining the capability information of the second access network device includes: receiving the capability information from the second access network device.

According to the foregoing method, when the terminal device initiates an RRC resume procedure, if the inactive-state paging cycle of the terminal device is greater than the threshold (or the core network element starts the mobile terminated communication handling policy of the terminal device), after the first access network device performs anchor relocation, if the second access network device does not support enhanced INACTIVE eDRX (or the second access network device configures, for the terminal device, an inactive-state paging cycle less than or equal to the threshold), the first access network device may send the fourth information to the core network element, to cancel the mobile terminated communication handling policy of the terminal device. In this way, the terminal device and the core network element can align updates of the inactive-state paging cycle of the terminal device without the terminal device entering a connected state.

**According to a third aspect,** an embodiment of this application provides a communication method. The method may be applied to a first access network device or a component (for example, a circuit or a chip) in a first access network device. For example, the method is applied to the first access network device. In the method, the first access network device receives third information from a second access network device, where the third information indicates an inactive-state paging cycle of a terminal device, or indicates that the paging cycle is greater than a threshold; and indicates, based on the third information, the terminal device to enter a connected state.

In a possible design, indicating the terminal device to enter the connected state includes: sending an RRC resume message to the terminal device, where the RRC resume message indicates the terminal device to enter the connected state.

According to the foregoing method, when the terminal device initiates an RRC resume procedure, if the inactive-state paging cycle of the terminal device is greater than the threshold, after performing anchor relocation, the first access network device may send third information to the second access network device, and then the second access network device may indicate the terminal device to enter the connected state based on the third information when a first paging cycle is greater than the threshold, so that updates of the inactive-state paging cycle of the terminal device can be aligned between the terminal device and a core network element.

**According to a fourth aspect,** this application provides a communication apparatus. The communication apparatus has functions for implementing the first aspect to the third aspect. For example, the communication apparatus includes a corresponding module, unit, or means (means) for performing the operations in the first aspect to the third aspect. The module, unit, or means may be implemented by software, may be implemented by hardware, or may be implemented by hardware by executing corresponding software.

In a possible design, the communication apparatus includes a processing unit and a communication unit. The communication unit may be configured to receive and send a signal, to implement communication between the communication apparatus and another apparatus. The processing unit may be configured to perform some internal operations of the communication apparatus. Functions performed by the processing unit and the communication unit may correspond to the operations in the first aspect to the third aspect.

In a possible design, the communication apparatus includes a processor, and the processor may be configured to be coupled to a memory. The memory may store a necessary computer program or necessary instructions for implementing the functions in the first aspect to the third aspect. The processor may execute the computer program or the instructions stored in the memory. When the computer program or the instructions are executed, the communication apparatus is enabled to implement the method according to any possible design or implementation in the first aspect to the third aspect.

In a possible design, the communication apparatus includes a processor and a memory. The memory may store a necessary computer program or necessary instructions for implementing the functions in the first aspect to the third aspect. The processor may execute the computer program or the instructions stored in the memory. When the computer program or the instructions are executed, the communication apparatus is enabled to implement the method according to any possible design or implementation in the first aspect to the third aspect.

In a possible design, the communication apparatus includes a processor and an interface circuit. The processor is configured to: communicate with another apparatus through the interface circuit, and perform the method according to any possible design or implementation in the first aspect to the third aspect.

It may be understood that in the fourth aspect, the processor may be implemented by hardware or may be implemented by software. When the processor is implemented by hardware, the processor may be a logic circuit, an integrated circuit, or the like. When the processor is implemented by software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

**According to a fifth aspect,** this application provides a computer-readable storage medium. The computer storage medium stores computer-readable instructions, and when a computer reads and executes the computer-readable instructions, the computer is enabled to perform the method according to any one of the possible designs of the first aspect to the third aspect.

**According to a sixth aspect,** this application provides a computer program product. When a computer reads and executes the computer program product, the computer is enabled to perform the method according to any one of the possible designs of the first aspect to the third aspect.

**According to a seventh aspect,** this application provides a chip. The chip includes a processor. The processor is coupled to a memory, and is configured to read and execute a software program stored in the memory, to implement the method according to any one of the possible designs of the first aspect to the third aspect.

**According to an eighth aspect,** this application provides a communication system. The communication system includes a terminal device and a first access network device, and optionally further includes a second access network device. The terminal device is configured to send, to the first access network device or the second access network device, information used to request to resume an RRC connection. The first access network device is configured to: receive the information used to request to resume the RRC connection; send first information to the second access network device, where the first information is used to configure an inactive-state paging cycle of the terminal device as a second paging cycle; and send second information to a core network element, where the second information is used to start, cancel, or modify a mobile terminated communication handling policy of the terminal device.

Optionally, the communication system further includes a core network element, and the core network element is configured to receive the second information.

**Alternatively,** the communication system includes a first access network device and a second access network device. The second access network device is configured to send, to the first access network device, information that is of a terminal device and that is used to request to resume an RRC connection. The first access network device is configured to: receive the information that is of the terminal device and that is used to request to resume the RRC connection, send first information to the second access network device, where the first information is used to configure an inactive-state paging cycle of the terminal device as a second paging cycle; and send second information to a core network element, where the second information is used to start, cancel, or modify a mobile terminated communication handling policy of the terminal device.

Optionally, the communication system further includes a core network element, and the core network element is configured to receive the second information.

Optionally, the communication system further includes a terminal device. The terminal device is configured to: send, to the second access network device, the information used to request to resume the RRC connection; and receive the first information from the second access network device.

**Alternatively,** the communication system includes a first access network device and a second access network device. The first access network device is configured to send third information to the second access network device. The second access network device is configured to: after determining, based on the third information, that a first paging cycle is greater than a threshold, indicate a terminal device to enter a connected state; and send fourth information to a core network element, where the fourth information is used to cancel a mobile terminated communication handling policy of the terminal device.

### BRIEF DESCRIPTION OF DRAWINGS

FIG. 1 is a diagram of a network architecture to which an embodiment of this application is applicable;
FIG. 2 is a diagram of a more specific network architecture to which an embodiment of this application is applicable;
FIG. 3 is a diagram of a paging procedure according to an embodiment of this application;
FIG. 4 is a diagram of an RRC resume procedure according to an embodiment of this application;
FIG. 5 is a schematic flowchart of starting a mobile terminated communication handling policy according to an embodiment of this application;
FIG. 6 is a schematic flowchart of canceling a mobile terminated communication handling policy according to an embodiment of this application;
FIG. 7 is a schematic flowchart corresponding to a communication method according to Embodiment 1 of this application;
FIG. 8 is a schematic flowchart corresponding to a communication method according to Embodiment 2 of this application;
FIG. 9 is a schematic flowchart corresponding to a communication method according to Embodiment 3 of this application;
FIG. 10 is a schematic flowchart corresponding to a communication method according to Embodiment 4 of this application;
FIG. 11 is a schematic flowchart corresponding to a communication method according to Embodiment 5 of this application;
FIG. 12 is a schematic flowchart corresponding to a communication method according to Embodiment 5 of this application;
FIG. 13 is a possible example block diagram of an apparatus according to an embodiment of this application; and
FIG. 14 is a possible diagram of a structure of an apparatus according to an embodiment of this application.

### DESCRIPTION OF EMBODIMENTS

The following describes the technical solutions in embodiments of this application with reference to the accompanying drawings in embodiments of this application. All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to give an example, an illustration, or a description. Any embodiment or design scheme described as an "example" in this application should not be explained as being more preferred or having more advantages than another embodiment or design scheme. Exactly, the word "example" is used to present a concept in a specific manner. In embodiments of this application, "of (of)", "relevant (corresponding, relevant)", and "corresponding (corresponding)" may be interchangeably used sometimes. It should be noted that meanings expressed by the terms are consistent when differences are not emphasized.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, and a 4th generation (4th generation, 4G) communication system like a long term evolution (long term evolution, LTE) system, a 5G communication system like a new radio (new radio, NR) system, and a future evolved communication system like a 6th generation (6th generation, 6G) mobile communication system.

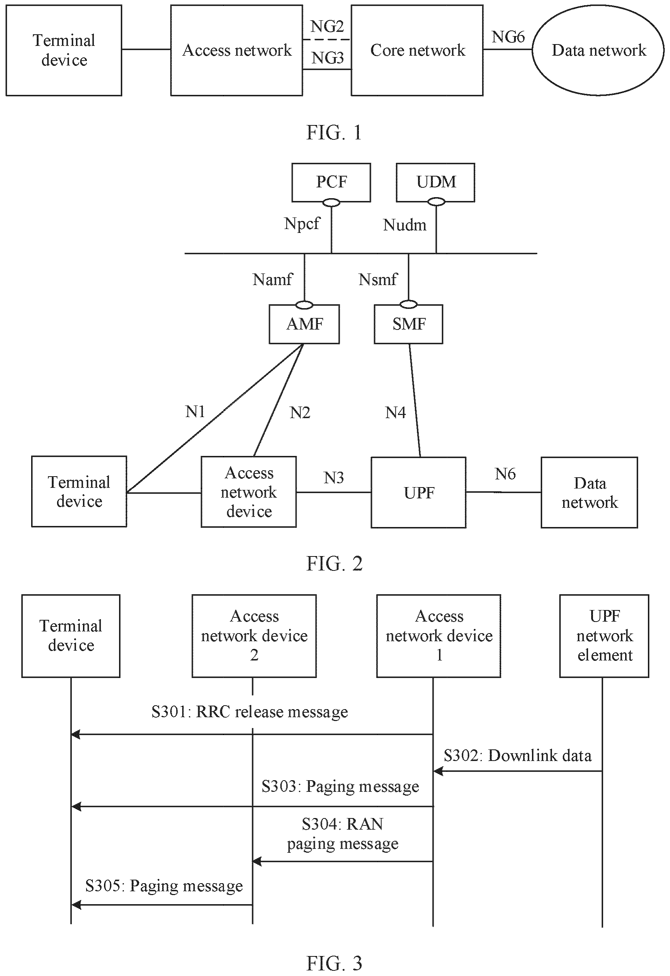

FIG. 1 is a diagram of a network architecture of a communication system to which this application is applicable. According to a 3GPP protocol standard requirement, the network architecture includes four components: a terminal device, an access network (access network, AN), a core network (core network, CN), and a data network (data network, DN). The access network may be a radio access network (radio access network, RAN).

The terminal device, the (radio) access network, and the core network are main parts of the network architecture, and may be logically divided into two parts: a user plane and a control plane. The control plane is used for mobile network management, and the user plane is used for service data transmission. For example, as shown in FIG. 1, in a 5G communication system, a next generation (next generation, NG)2 reference point is located between a (radio) access network control plane and a core network control plane, an NG3 reference point is located between a (radio) access network user plane and a core network user plane, and an NG6 reference point is located between the core network user plane and a data network.

The following describes each component of the network architecture in detail.

### (1) Terminal device

The terminal device is a device that provides voice and/or data connectivity for a user. The terminal device may also be referred to as user equipment (user equipment, UE), a terminal (terminal), an access terminal, a terminal unit, a terminal station, a mobile station (mobile station, MS), a remote station, a remote terminal, a mobile terminal (mobile terminal, MT), a wireless communication device, a terminal agent, terminal equipment, or the like.

For example, the terminal device may be a handheld device having a wireless connection function, or may be a vehicle, a vehicle-mounted device (for example, a vehicle-mounted communication apparatus or a vehicle-mounted communication chip), or the like having a communication function. Currently, some examples of the terminal device are as follows: a mobile phone (mobile phone), a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a tablet computer, a computer having a wireless transceiver function, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device may be deployed on land, including an indoor or outdoor terminal device, a handheld terminal device, a wearable terminal device, or a vehicle-mounted terminal device; or may be deployed on a water surface (for example, on a ship); or may be deployed in air (for example, on an airplane, a balloon, or a satellite). A specific technology, a device form, an application scenario, and a name that are used by the terminal device are not limited in embodiments of this application.

### (2) Access network

The (radio) access network is deployed near the terminal device, provides a network access function for an authorized user in a specific area, and can determine transmission tunnels of different quality based on a user level, a service requirement, and the like, to perform transmission of user data. The (radio) access network can manage and properly use resources of the (radio) access network, provide an access service for the terminal device as required, and is used for forwarding a control signal and service data between the terminal device and the core network.

A (radio) access network device is deployed in the (radio) access network, and is configured to connect the terminal device to a wireless network. The (radio) access network device may be generally connected to the core network through a wired link (for example, an optical fiber cable). The (radio) access network device may also be referred to as a RAN device/node, or a base station.

For example, the (radio) access network device may include a base station, an evolved NodeB (evolved NodeB, eNodeB) in an LTE system or an LTE-Advanced (LTE-Advanced, LTE-A) system, a next generation NodeB (next generation NodeB, gNB) in a 5G communication system, a transmission reception point (transmission reception point, TRP), a baseband unit (baseband unit, BBU), an access point (access point, AP) in a wireless local area network (wireless local area network, WLAN), an integrated access and backhaul (integrated access and backhaul, IAB) node, a base station in a future mobile communication system, an access node in a Wi-Fi system, or the like. Alternatively, the radio access network device may be a module or a unit that completes some functions of a base station, for example, a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It should be understood that this application may be further applied to a 6G communication system. The access network device may be a core network element or device that undertakes a function of a base station in a future communication system. In this application, the "access network device" may also be referred to as a "core network device", a "core network apparatus", a "core network", or the like.

The (radio) access network device may be deployed on land, including an indoor or outdoor (radio) access network device, a handheld (radio) access network device, a wearable (radio) access network device, or a vehicle-mounted (radio) access network device; or may be deployed on a water surface (for example, on a ship); or may be deployed in air (for example, on an airplane, a balloon, or a satellite). A specific technology, a device form, an application scenario, and a name that are used by the (radio) access network device are not limited in embodiments of this application. In embodiments of this application, the (radio) access network device may be referred to as an access network (AN) device for short. Unless otherwise specified, all access network devices in the following may be (radio) access network devices.

### (3) Core network

The core network is used for maintaining subscription data of a mobile network, managing a network element of the mobile network, and providing functions such as session management, mobility management, policy management, and security authentication for the terminal device.

Specific content may include: The core network provides network access authentication for the terminal device when the terminal device is attached; allocates a network resource to the terminal device when the terminal device has a service request; updates a network resource for the terminal device when the terminal device moves; provides a fast recovery mechanism for the terminal device when the terminal device is idle; releases a network resource for the terminal device when the terminal device detaches; and provides a data routing function for the terminal device when the terminal device has service data, for example, forwards uplink data to the data network, or receives downlink data from the data network and forwards the downlink data to the (radio) access network, to send the downlink data to the terminal device.

### 4. Data network

The data network is configured to provide a service for a user. In an actual communication process, a client is usually located on the terminal device, and a server is usually located in the data network. The data network may be a private network, for example, a local area network, may be an external network that is not managed and controlled by an operator, for example, an internet (Internet), or may be a dedicated network jointly deployed by operators, for example, a network that provides an IP multimedia network subsystem (IP multimedia core network subsystem, IMS) service.

**FIG.** 2 is a diagram of a more specific network architecture to which an embodiment of this application is applicable. The network architecture may be a network architecture of a 5G communication system. As shown in FIG. 2, the network architecture includes a terminal device, an access network device, various types of core network elements/function entities, and a data network.

A core network user plane includes a user plane function (user plane function, UPF). A core network control plane includes but is not limited to an access and mobility management function (access and mobility management function, AMF) network element, a session management function (session management function, SMF) network element, a policy control function (policy control function, PCF) network element, and a unified data management (unified data management, UDM) network element.

The UPF network element is mainly used for connecting to an external network, and forwarding a user data packet according to a routing rule of the SMF network element, for example, sending uplink data to the data network or another UPF network element, and sending downlink data to another UPF network element or the access network device.

The AMF network element is mainly used for access management and mobility management of the terminal device, for example, used for status maintenance of the terminal device, reachability management of the terminal device, forwarding of a mobility management non-access-stratum (mobility management non-access-stratum, MM NAS) message, and forwarding of a session management (session management, SM) N2 message.

The SMF network element is mainly used for session management in a mobile network, including establishing a session for the terminal device, and allocating and releasing a resource for the session. The resource includes session quality of service (quality of service, QoS), a session path, a forwarding rule, and the like. For example, the SMF network element is used for allocating an internet protocol (internet protocol, IP) address to the terminal device or selecting a UPF network element that provides a packet forwarding function.

The PCF network element is mainly used for user policy management, including policy authorization, quality of service, and generation of a charging rule, and delivering a corresponding rule to the UPF network element via the SMF network element, to complete installation of a corresponding policy and rule.

The UDM network element is mainly used for managing and controlling user data, for example, managing subscription information, including obtaining the subscription information and providing the subscription information for another network element (for example, an AMF network element); generating a 3GPP authentication credential for the terminal device; and registering and maintaining a network element that currently serves the terminal device (for example, an AMF represented by AMF ID1 is a current serving AMF of the terminal device, namely, a serving AMF). It should be noted that although not shown in FIG. 2, the network architecture shown in FIG. 2 may further include a unified data repository (unified data repository, UDR) network element. A function of the UDM network element may be implemented by interacting with the UDR network element. The UDR network element is configured to store data needed when the UDM network element performs an operation of the UDM network element. The UDM network element is configured to interact with another network element. During actual implementation, the UDM network element and the UDR network element may be two independent physical entities, or the UDR network element may be integrated into the UDM network element. This is not limited.

Although not shown, the foregoing network architecture may further include another possible network element. This is not specifically limited.

It may be understood that FIG. 2 is illustrated by using an example in which a core network control plane uses a service-oriented architecture. In the service-oriented architecture, control plane network elements are connected to one service bus, and interaction between the control plane network elements is performed in a service invoking manner. In other words, the control plane network elements open a service to another control plane network element for invoking by the another control plane network element. In another possible implementation, the core network control plane may alternatively use a point-to-point communication manner. In point-to-point communication, a set of specific messages exist on a communication interface between control plane network elements, and are used by the control plane network elements at two ends of the interface during communication. For example, an interface between the access network device and the AMF network element is referred to as an N2 interface, an interface between the access network device and the UPF network element is referred to as an N3 interface, an interface between the UPF network element and the SMF network element may be referred to as an N4 interface, and an interface between the UPF network element and the data network is referred to as an N6 interface.

In a future communication system, for example, a 6th generation (6th generation, 6G) communication system, the foregoing network element or device may still use a name of the network element or device in a 4th generation (4th generation, 4G) or 5G communication system, or have another name. A function of the network element or the device may be completed by one independent network element, or may be jointly completed by several network elements. This is not limited in embodiments of this application. During actual deployment, the network elements may be co-located. For example, the access and mobility management function network element may be co-located with the session management function network element. The session management function network element may be co-located with the user plane function network element. When two network elements are co-located, interaction between the two network elements provided in embodiments of this application becomes an internal operation of the co-located network elements or may be omitted.

The various possible network elements/function entities in the network architecture may be network elements in a hardware device, may be software functions running on dedicated hardware, or may be virtualized functions instantiated on a platform (for example, a cloud platform). Optionally, the network elements or function entities may be implemented by one device, may be jointly implemented by a plurality of devices, or may be implemented by different function modules in one device. This is not specifically limited in embodiments of this application.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of the communication system architecture and emergence of new service scenarios, the technical solutions provided in embodiments of this application are also applicable to similar technical problems.

The following explains and describes related technical features in embodiments of this application. It should be noted that these explanations are intended to make embodiments of this application easier to understand, but should not be considered as a limitation on the protection scope claimed in this application.

### 1. Paging

A status of a terminal device may include a radio resource control (radio resource control, RRC) idle state, an RRC inactive (INACTIVE) state, and an RRC connected state. The RRC idle state may be referred to as an idle state for short, the RRC inactive state may be referred to as an inactive state for short, and the RRC connected state may be referred to as a connected state for short.

Paging is used to notify a terminal device in an idle state or an inactive state to set up a service (that is, to be called), or notify the terminal device that a system message changes, and the terminal device needs to re-read a changed system broadcast message, or notify the terminal device to receive earthquake and tsunami warning system (earthquake and tsunami warning system, ETWS) information. Based on an initiator of a paging message, paging may be classified into CN paging and RAN paging. A paging message for CN paging is initiated by a core network element, and a paging message for RAN paging is initiated by an access network device. The CN paging is mainly used to page a terminal device in an idle state, and the RAN paging is used to page a terminal device in an inactive state.

The terminal device in the inactive state is used as an example. The following describes a possible paging procedure with reference to FIG. 3. As shown in FIG. 3, the procedure may include the following steps.

S301: An access network device 1 sends an RRC release message to the terminal device, where the RRC release message indicates the terminal device to enter an inactive state.

For example, after the terminal device accesses a cell (for example, a cell a1) of the access network device 1 and enters a connected state, the access network device 1 may indicate the terminal device to switch from the connected state to the inactive state. For example, the access network device 1 may send the RRC release message to the terminal device, where the RRC release message indicates the terminal device to enter the inactive state. Correspondingly, after receiving the RRC release message, the terminal device may enter the inactive state. An RRC connection between the terminal device in the inactive state and the access network device 1 is disconnected, but the access network device 1 still stores context information of the terminal device. In this case, the access network device 1 may also be referred to as an access network device to which the terminal device is finally connected or an access network device that last serves the terminal device.

In addition, the RRC release message sent by the access network device 1 to the terminal device may include RAN-based notification area (RAN-based notification area, RNA) configuration information, used to configure an RNA for the terminal device. The RNA may include one or more cells, and the RNA configuration information includes at least one of the following: (1) Identifiers of the one or more cells, where a plurality of cells may belong to one access network device or a plurality of access network devices. For example, if the RNA includes the cell a1 of the access network device 1 and a cell b1 of an access network device 2, the RNA configuration information may include identifiers of the cell a1 and the cell b1. (2) At least one RAN tracking area code (RAN tracking area code), where one RAN tracking area may include one or more cells. When one RAN tracking area includes a plurality of cells, the plurality of cells may belong to one access network device or a plurality of access network devices.

S302: After the terminal device enters the inactive state, a UPF network element may send, after receiving downlink data of the terminal device, the downlink data to the access network device 1 to which the terminal device is finally connected; or after the terminal device enters the inactive state, an AMF network element sends signaling (excluding a UE context release command message) associated with the terminal device to the access network device 1 to which the terminal device is finally connected.

S303: The access network device 1 sends a paging message in a RAN paging area of the access network device 1 based on an RNA configured for the terminal device.

S304: The access network device 1 sends a RAN paging (XnAP RAN Paging) message to the access network device 2 through an Xn interface based on the RNA configured for the terminal device.

S305: The access network device 2 sends a paging message in a RAN paging area of the access network device 2.

For S303 to S305, specifically, after the access network device 1 receives the downlink data of the terminal device, because the access network device 1 cannot determine whether the terminal device is within coverage of the access network device 1, the access network device 1 may determine, based on the RNA configured for the terminal device, the RAN paging area (for example, the cell a1) of the access network device 1, and send the paging message in the RAN paging area of the access network device 1. The RAN paging area of the access network device 1 may include one or more cells, the one or more cells are cells of the access network device 1, and the one or more cells belong to the RNA of the terminal device.

In addition, the access network device 1 may further send the RAN paging message to the access network device 2 based on the RNA configured for the terminal device, where the RAN paging message may include an identifier of the terminal device. Correspondingly, after receiving the RAN paging message, the access network device 2 determines the RAN paging area (for example, the cell b1) of the access network device 2, and further sends the paging message in the RAN paging area of the access network device 2.

The paging message may include a paging record list (PagingRecordlist), and the paging record list includes identifiers of one or more terminal devices that need to be paged. After receiving the paging message from the access network device 2, if determining that the paging record list includes the identifier of the terminal device, the terminal device in the inactive state may initiate an RRC resume procedure.

### 2. RRC resume procedure

When the terminal device is in the inactive state, the terminal device may initiate the RRC resume procedure.

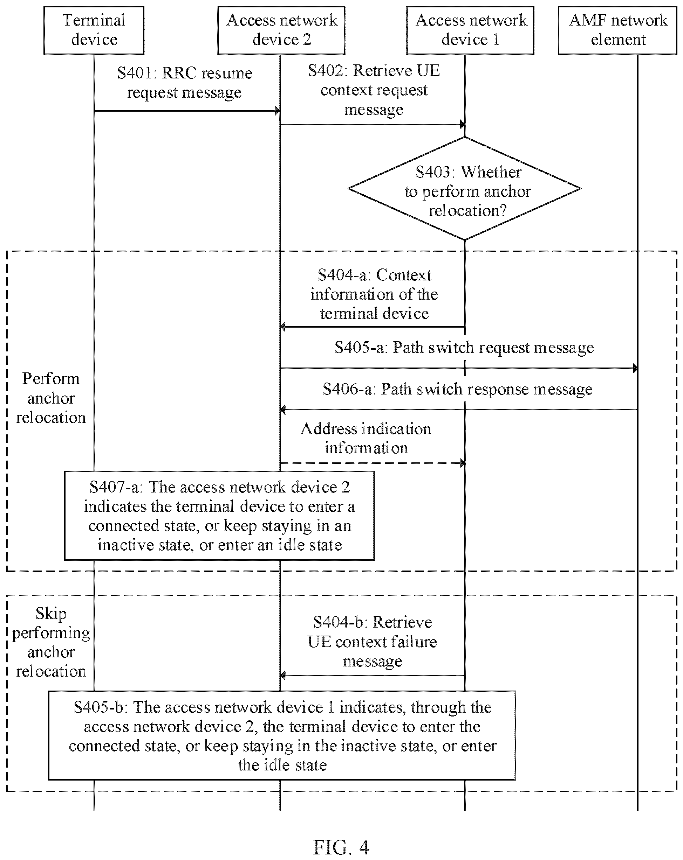

The following describes a possible RRC resume procedure with reference to FIG. 4 by using a scenario in which "the access network device 1 is an access network device that last serves the terminal device, and the terminal device moves from the coverage of the access network device 1 to coverage of the access network device 2" as an example. As shown in FIG. 4, the procedure may include the following steps.

S401: After moving to the coverage of the access network device 2, the terminal device sends an RRC resume request message to the access network device 2.

Here, there may be a plurality of cases in which the terminal device sends the RRC resume request message to the access network device 2.

For example, in the procedure shown in FIG. 3, after receiving the paging message from the access network device 2, the terminal device may send the RRC resume request message to the access network device 2.

For another example, after an RNA timer of the terminal device times out, the terminal device may send the RRC resume request message to the access network device 2.

For another example, after the terminal device moves out of the RNA, the terminal device may send the RRC resume request message to the access network device 2.

For another example, the terminal device actively sends the RRC resume request message to the access network device 2.

For example, the RRC resume request message may include an inactive-radio network temporary identity (inactive-radio network temporary identity, I-RNTI) of the terminal device, and may further include other possible information.

S402: After receiving the RRC resume request message, the access network device 2 sends a retrieve UE context request (retrieve UE context request) message to the access network device 1, and correspondingly, the access network device 1 may receive the retrieve UE context request message.

Here, after obtaining an identifier of the access network device 1 in the I-RNTI through parsing, the access network device 2 may send the retrieve UE context request message to the access network device 1. The retrieve UE context request message may include the I-RNTI of the terminal device. Further, the access network device 1 may determine the context information of the terminal device based on the I-RNTI.

S403: The access network device 1 determines whether to perform anchor relocation, and if the access network device 1 determines to perform anchor relocation, performs S404-a to S407-a, or if the access network device 1 determines not to perform anchor relocation, performs S404-b and S405-b.

Here, anchor relocation may be understood as relocation of the context information of the terminal device when the terminal device is in the inactive state. Before anchor relocation is performed, the context information of the terminal device is stored in the access network device 1. After anchor relocation is performed, the context information of the terminal device is stored in the access network device 2. Optionally, the access network device 1 may release the context information of the terminal device.

S404-a: The access network device 1 sends a retrieve UE context response (retrieve UE context response) message to the access network device 2, and correspondingly, the access network device 2 receives the retrieve UE context response message.

Here, the retrieve UE context response message may include the context information of the terminal device, so that the access network device 2 can obtain the context information of the terminal device.

S405-a: The access network device 2 performs path switching. For example, the access network device 2 sends a path switching request message to the AMF network element, and correspondingly, the AMF network element receives the path switching request message.

S406-a: The AMF network element sends a path switch response message to the access network device 2, and correspondingly, the access network device 2 receives the path switch response message, to complete path switching.

Here, path switching means that a data transmission path of the terminal device is switched from "the UPF network element -> the access network device 1 -> the terminal device" to "the UPF network element -> the access network device 2 -> the terminal device". In other words, after path switching, downlink data may be sent by the UPF network element to the access network device 2, and then sent by the access network device 2 to the terminal device. Uplink data may be sent by the terminal device to the access network device 2, and then sent by the access network device 2 to the UPF network element.

Optionally, the access network device 2 may further send address indication information to the access network device 1, where the address indication information indicates an address used by the access network device 1 to forward data (namely, the downlink data). If the access network device 1 receives the downlink data of the terminal device from the UPF network element before path switching, the access network device 1 may forward the downlink data to the access network device 2 based on the address indication information, and the access network device 2 sends the downlink data to the terminal device.

S407-a: The access network device 2 may indicate the terminal device to enter the connected state, or keep staying in the inactive state, or enter the idle state.

Here, a specific state that the access network device 2 indicates the terminal device to enter may depend on internal implementation of the access network device 2. This is not limited in embodiments of this application. For example, if there is downlink data that needs to be sent to the terminal device, the access network device 2 may indicate the terminal device to enter the connected state, to receive the downlink data.

S404-b: The access network device 1 sends a retrieve UE context failure (retrieve UE context failure) message to the access network device 2, where the retrieve UE context failure message indicates not to perform anchor relocation.

S405-b: The access network device 1 may indicate, through the access network device 2, the terminal device to enter the connected state, or keep staying in the inactive state, or enter the idle state.

Here, a specific state that the access network device 1 indicates the terminal device to enter may depend on internal implementation of the access network device 1. This is not limited in embodiments of this application. Because the terminal device is located in the coverage of the access network device 2, the access network device 1 may indicate, through the access network device 2, the terminal device to enter the connected state, or keep staying in the inactive state, or enter the idle state. For example, the access network device 1 may send an RRC resume message or an RRC release message to the terminal device through the access network device 2, and the RRC resume message or the RRC release message may be encapsulated in the retrieve UE context failure message.

### 3. Paging cycle

To reduce power consumption of monitoring the paging message by the terminal device, the access network device (for example, the foregoing access network device 1 or access network device 2) may periodically send the paging message to the terminal device based on the paging cycle. Correspondingly, the terminal device may periodically receive the paging message based on the paging cycle, that is, the terminal device may periodically detect a PDCCH. The paging cycle in embodiments of this application may be a RAN paging cycle, namely, a paging cycle in which the access network device pages the terminal device.

The inactive-state paging cycle of the terminal device is used as an example. The inactive-state paging cycle of the terminal device may be a DRX cycle, an INACTIVE extended DRX (extended DRX, eDRX) cycle, and an enhanced INACTIVE eDRX (enhanced INACTIVE eDRX) cycle.

To further reduce power consumption, an extended DRX technology is introduced in Release 17 (release17, R17) of the 3rd generation partnership project (3rd generation partnership project, 3GPP). The DRX cycle is prolonged, so that the terminal device can be in a sleep state for a longer time. An idle-state eDRX cycle of the terminal device may be extended to more than 3 hours. However, only a case in which an inactive-state eDRX (namely, INACTIVE eDRX) cycle of the terminal device is not greater than 10.24s is discussed.

To further reduce power consumption, a potential method is to further prolong the INACTIVE eDRX cycle to be greater than 10.24s. An INACTIVE eDRX cycle greater than 10.24s may be referred to as an enhanced INACTIVE eDRX cycle.

### 4. Mobile terminated communication handling policy

It can be learned from the foregoing descriptions in FIG. 3 that, for the terminal device in the inactive state, after the downlink data of the terminal device arrives, the UPF network element sends the downlink data to the access network device. After the enhanced INACTIVE eDRX cycle is introduced, to avoid an excessively large amount of data that needs to be buffered by the access network device due to excessively long sleep time of the terminal device, a mobile terminated (mobile terminated, MT) communication handling (MT communication handling) policy of the terminal device may be started (or enabled). For example, after the mobile terminated communication handling policy is started, the core network element considers that the terminal device is temporarily unreachable. Therefore, signaling that is about the terminal device and that is received by the core network element from another network element is rejected, and received data of the terminal device is temporarily buffered. For example, the mobile terminated communication handling policy includes a buffer time length, and the buffer time length may be determined based on the inactive-state paging cycle of the terminal device. For specific content of the mobile terminated communication handling policy, refer to a specification in a protocol. Details are not described again.

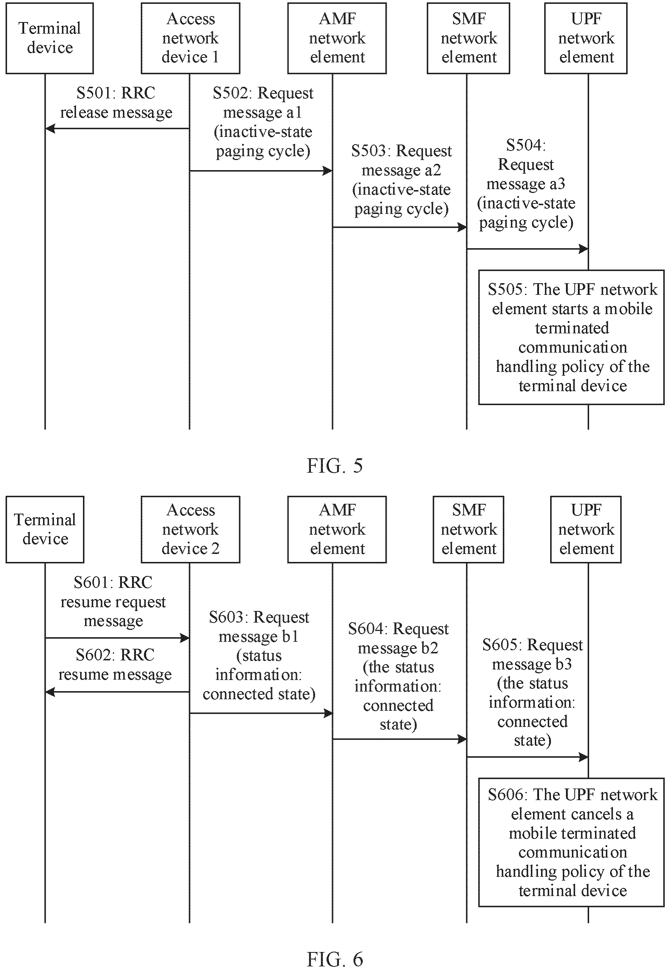

The following describes a possible implementation procedure with reference to FIG. 5. As shown in FIG. 5, the procedure may include the following steps.

S501: The access network device 1 sends an RRC release message to the terminal device, where the RRC release message indicates the terminal device to enter the inactive state.

For example, the RRC release message may include an inactive-state paging cycle configured by the access network device 1 for the terminal device. For example, the inactive-state paging cycle is an enhanced INACTIVE eDRX cycle, and the enhanced INACTIVE eDRX cycle is greater than 10.24s.

S502: The access network device 1 sends a request message a1 to the AMF network element.

For example, the request message a1 may be a new N2 message (message), and the message includes at least one of the following: an indication indicating that the enhanced INACTIVE eDRX cycle is configured for the terminal device; the enhanced INACTIVE eDRX cycle; a corresponding paging transmission window (paging transmission window, PTW) length; or an I-RNTI. Here, an example in which the request message a1 includes the enhanced INACTIVE eDRX cycle is used.

Further, after the request message a1 is sent, the access network device 1 may wait for a response message from the AMF network element, where the response message indicates whether a core network starts the mobile terminated communication handling policy of the terminal device.

It may be understood that S502 may be performed before S501, or may be performed after S501, or may be performed simultaneously with S501. This is not specifically limited.

S503: After receiving the request message a1, the AMF network element may start the mobile terminated communication handling policy of the terminal device, and send a request message a2 to the SMF network element. For example, the request message a2 includes enhanced INACTIVE eDRX.

For example, the request message a2 may be a session context update request (Nsmf_PDUSession_UpdateSMContext request) message.

S504: After receiving the request message a2, the SMF network element sends a request message a3 to the UPF network element, where the request message a3 includes the enhanced INACTIVE eDRX.

For example, the request message a3 may be an N4 session modification message.

S505: After receiving the request message a3, the UPF network element may start the mobile terminated communication handling policy of the terminal device or a data buffering function.

For example, after receiving downlink data of the terminal device, the UPF network element may first buffer the downlink data of the terminal device, and send the downlink data of the terminal device to the access network device 1 after buffer time reaches a buffer time length (where the buffer time length may be configured by the SMF network element for the UPF network element).

Optionally, in the procedure shown in FIG. 5, the UPF network element may further send an N4 session modification response message to the SMF network element. After receiving the N4 session modification response message, the SMF network element sends a session context update response message to the AMF network element. After receiving the session context update response message, the AMF network element sends an N2 response message to the access network device 1.

In this way, according to the procedure shown in FIG. 5, when the inactive-state paging cycle of the terminal device is greater than 10.24s, the mobile terminated communication handling policy of the terminal device is started.

Further, after the terminal device enters a connected state, the mobile terminated communication handling policy of the terminal device may be canceled.

The following describes a possible implementation procedure with reference to FIG. 6. As shown in FIG. 6, the procedure may include the following steps.

S601: After moving to the coverage of the access network device 2, the terminal device sends an RRC resume request message to the access network device 2.

S602: The access network device 2 obtains context information of the terminal device from the access network device 1, and sends an RRC resume message to the terminal device, where the RRC resume message indicates the terminal device to enter the connected state.

S603: The access network device 2 sends a request message b1 to the AMF network element. For example, the request message b1 includes status information of the terminal device, and the status information indicates the terminal device to be in the connected state (that is, the status information indicates the core network element to cancel the mobile terminated communication handling policy of the terminal device or the data buffering behavior).

For example, the request message b1 may be an N2 message. For example, an existing RRC inactive state transition report (RRC INACTIVE transition report) message is reused. Alternatively, based on an improvement of the message, the request message b1 is used to notify the core network that a status of the terminal device changes, for example, the terminal device enters the RRC connected state or leaves the RRC inactive state.

It may be understood that S603 may be performed before S602, or may be performed after S602, or may be performed simultaneously with S602. This is not specifically limited.

S604: After receiving the request message b1, the AMF network element sends a request message b2 to the SMF network element, where the request message a2 includes the status information of the terminal device.

For example, the request message b2 may be a session context update request message.

S605: After receiving the request message b2, the SMF network element sends a request message b3 to the UPF network element, where the request message b3 includes the status information of the terminal device.

For example, the request message b3 may be an N4 session modification message.

S606: After receiving the request message b3, the UPF network element may cancel the mobile terminated communication handling policy of the terminal device.

Optionally, in the procedure shown in FIG. 6, the UPF network element may further send an N4 session modification response message to the SMF network element. After receiving the N4 session modification response message, the SMF network element sends a session context update response message to the AMF network element. After receiving the session context update response message, the AMF network element sends an N2 response message to the access network device 1.

Based on the descriptions of the foregoing related technical features, in embodiments of this application, a related implementation of updating the inactive-state paging cycle of the terminal device is studied.

For example, the access network device 1 configures the inactive-state paging cycle for the terminal device, and the paging cycle is greater than 10.24s (that is, the access network device 1 notifies the core network element to start the mobile terminated communication handling policy of the terminal device). When the inactive-state paging cycle of the terminal device needs to be updated, in a possible implementation, the terminal device is first indicated to enter the connected state from the inactive state, and the mobile terminated communication handling policy of the terminal device is canceled by using S604 to S606 in FIG. 6. Further, if an updated inactive-state paging cycle of the terminal device is also greater than 10.24s, the access network device needs to start the mobile terminated communication handling policy of the terminal device by using the procedure shown in FIG. 5.

In other words, in the foregoing manner, the terminal device needs to enter the connected state to update the inactive-state paging cycle of the terminal device. This causes unnecessary connection access and wastes communication resources. To resolve this problem, an embodiment of this application provides a communication method. For details, refer to Embodiment 1 to Embodiment 5. According to the communication method, an inactive-state paging cycle of a terminal device is updated when the terminal device is in an inactive state.

In addition, in the foregoing manner, when the terminal device in the inactive state moves from the coverage of the access network device 1 to the coverage of the access network device 2, the access network device 2 does not know whether the inactive-state paging cycle configured by the access network device 1 for the terminal device is greater than 10.24s (in other words, the access network device 2 does not know whether the core network element starts the mobile terminated communication handling policy of the terminal device). Therefore, when the inactive-state paging cycle configured by the access network device 1 for the terminal device is less than or equal to 10.24s, if the access network device 2 still indicates the terminal device to enter the connected state, and notifies the core network element to cancel the mobile terminated communication handling policy of the terminal device, this is an invalid behavior and wastes transmission resources. To resolve this problem, an embodiment of this application provides a communication method. For details, refer to Embodiment 6. According to the communication method, a terminal device is indicated to enter a connected state in a targeted manner, and a core network element is notified to cancel a mobile terminated communication handling policy of the terminal device, to reduce transmission resource overheads.

The following describes, with reference to specific embodiments, the communication method provided in this application.

### Embodiment 1

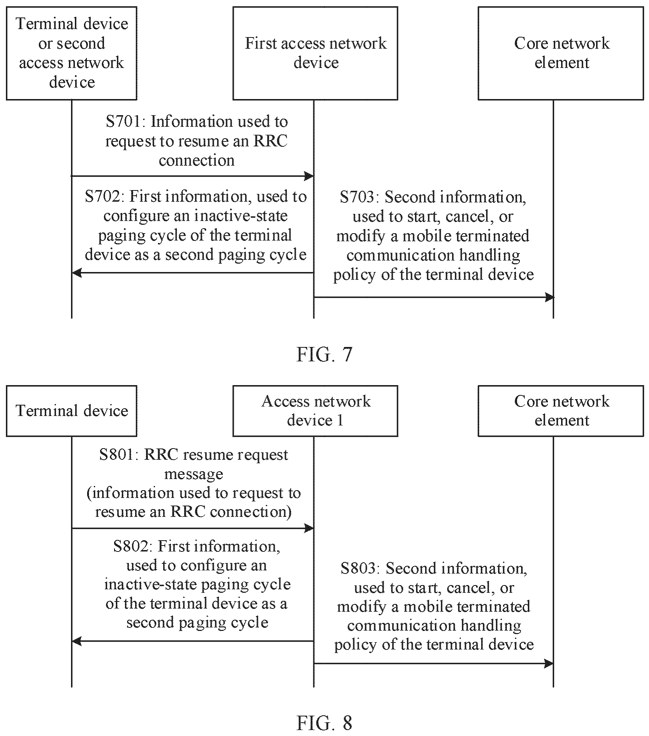

**FIG. 7** is a schematic flowchart of a communication method according to Embodiment 1 of this application. As shown in FIG. 7, the method includes the following steps.

**S701**: A terminal device or a second access network device sends, to a first access network device, information used to request to resume an RRC connection, and correspondingly, the first access network device receives the information used to request to resume the RRC connection, where an inactive-state paging cycle of the terminal device is a first paging cycle.

**S702**: The first access network device sends first information to the terminal device or the second access network device, where the first information is used to configure the inactive-state paging cycle of the terminal device as a second paging cycle.

For example, the information used to request to resume the RRC connection may be an RRC resume cause (RRC resume cause) value, or may be other possible information. The RRC resume cause value may indicate a reason why the terminal device sends an RRC resume request message, or a reason why the terminal device requests to resume the RRC connection. For example, the reason why the terminal device sends the RRC resume request message is that an RNA update is triggered due to an RNA timer of the terminal device timing out.

For example, the first paging cycle may be configured for the terminal device by an access network device that last serves the terminal device. For example, before S701, the access network device that last serves the terminal device may send an RRC release message to the terminal device, where the RRC release message indicates the terminal device to enter an inactive state, and the RRC release message includes the first paging cycle.
(1) In a possible scenario, the first access network device is an access network device that last serves the terminal device (or an access network device that stores context information of the terminal device), and the terminal device in the inactive state is currently located in coverage of the first access network device. In other words, the first paging cycle may be configured by the first access network device for the terminal device.

In this scenario, the terminal device may communicate with the first access network device. For example, in S701, the terminal device may send, to the first access network device, the information used to request to resume the RRC connection, and in S702, the first access network device may send the first information to the terminal device.

(2) In another possible scenario, the first access network device is an access network device that last serves the terminal device, and the terminal device in the inactive state is currently located in coverage of the second access network device. In other words, the first paging cycle may be configured by the first access network device for the terminal device.

In this scenario, the terminal device may communicate with the first access network device through the second access network device. For example, in S701, after receiving, from the terminal device, the information used to request to resume the RRC connection, the second access network device may send, to the first access network device, the information used to request to resume the RRC connection. In addition, in S702, the first access network device may send the first information to the second access network device, and the second access network device forwards the first information to the terminal device.

(3) In another possible scenario, a third access network device is an access network device that last serves the terminal device, and the terminal device in the inactive state is currently located in coverage of the first access network device. In other words, the first paging cycle may be configured by the third access network device for the terminal device.

In this scenario, the terminal device may communicate with the first access network device. For example, in S701, the terminal device may send, to the first access network device, the information used to request to resume the RRC connection, and in S702, the first access network device may send the first information to the terminal device.

Optionally, in this scenario, the third access network device may send third information to the first access network device, where the third information indicates the first paging cycle, or indicates that the first paging cycle is greater than a threshold. In this way, the first access network device may obtain the first paging cycle, or learn that the first paging cycle is greater than the threshold.

**S703**: The first access network device sends second information to a core network element, where the second information is used to start, cancel, or modify a mobile terminated communication handling policy of the terminal device.

The core network element herein includes, for example, an AMF network element, and optionally, further includes at least one of an SMF network element and a UPF network element.

For example, the second information may include the second paging cycle and/or indication information, and the indication information indicates an operation on the communication handling policy. The operation on the communication handling policy includes starting, canceling, or modifying.
**(1)** In a possible implementation, the first access network device may send the second information to the core network element based on the first paging cycle and the second paging cycle.

Specifically, when the first paging cycle is less than or equal to the threshold, and the second paging cycle is greater than the threshold, the first access network device may send the second information to the core network element, where the second information is used to start the mobile terminated communication handling policy of the terminal device. In this case, the second information may include the second paging cycle, and optionally, further include the indication information (where an operation indicated by the indication information is "start"). The threshold may be preconfigured, or predefined in a protocol. For example, the threshold is 10.24s.

When the first paging cycle is greater than the threshold, and the second paging cycle is greater than the threshold, the first access network device may send the second information to the core network element, where the second information is used to modify the mobile terminated communication handling policy of the terminal device. In this case, the second information may include the second paging cycle, and optionally, further include the indication information (where an operation indicated by the indication information is "modify").

When the first paging cycle is greater than the threshold, and the second paging cycle is less than or equal to the threshold, the first access network device may send the second information to the core network element, where the second information is used to cancel the mobile terminated communication handling policy of the terminal device. In this case, the second information may include the second paging cycle and/or the indication information (where an operation indicated by the indication information is "cancel"). When the second information includes the second paging cycle but does not include the indication information, it may be understood that the second paging cycle implicitly indicates that the operation on the communication handling policy is "cancel".

When the first paging cycle is less than or equal to the threshold, and the second paging cycle is less than or equal to the threshold, the first access network device may not need to send the second information to the core network element.

**(2)** In another possible implementation, the first access network device may directly send the second information to the core network element (that is, the first access network device does not need to pay attention to values of the first paging cycle and the second paging cycle). In this case, the second information may include the second paging cycle (excluding the indication information). Correspondingly, after receiving the second information, the core network element may determine, based on the second paging cycle, whether to start the mobile terminated communication handling policy of the terminal device. For example, if the second paging cycle is greater than the threshold, the core network element may start the mobile terminated communication handling policy of the terminal device based on the second paging cycle. If the second paging cycle is less than or equal to the threshold, the core network element does not need to start the mobile terminated communication handling policy of the terminal device.

Alternatively, if the core network element has started the mobile terminated communication handling policy of the terminal device, and the second paging cycle is greater than the threshold, the core network element may restart or modify the mobile terminated communication handling policy of the terminal device (for example, modify a buffer time length) based on the second information. If the core network element has started the mobile terminated communication handling policy of the terminal device, and the second paging cycle is less than or equal to the threshold, the core network element may cancel the mobile terminated communication handling policy of the terminal device based on the second information. If the core network element does not start the mobile terminated communication handling policy of the terminal device previously, and the second paging cycle is greater than the threshold, the core network element may start the mobile terminated communication handling policy of the terminal device based on the second information. If the core network element does not start the mobile terminated communication handling policy of the terminal device previously, and the second paging cycle is less than or equal to the threshold, the core network element may ignore the second information.

In addition, there are a plurality of implementations in which the first access network device sends the second information to the core network element. For example, the first access network device may send the second information to the core network element by reusing the request message a1 in FIG. 5. In other words, the second information may be carried in the request message a1. Alternatively, the access network device may send the second information to the core network element by reusing the request message b1 in FIG. 6. In other words, the second information may be carried in the request message b1 (where a difference between FIG. 7 and FIG. 6 lies in that the terminal device in FIG. 7 is in the inactive state and does not need to enter the connected state).

According to the foregoing method, when the terminal device initiates an RRC resume procedure, the first access network device may configure the inactive-state paging cycle (namely, the second paging cycle) for the terminal device, and send the second information to the core network element, to notify the core network element to update (or start, modify, or cancel) the mobile terminated communication handling policy of the terminal device. In this way, the terminal device and the core network element can align updates of the inactive-state paging cycle of the terminal device without the terminal device entering a connected state.

### Embodiment 2

In Embodiment 2, a possible implementation procedure of Embodiment 1 is described by using a scenario in which "an access network device 1 is an access network device that last serves a terminal device (or an access network device that stores context information of the terminal device), and the terminal device in an inactive state is currently located in coverage of the access network device 1" as an example.

**FIG. 8** is a schematic flowchart corresponding to a communication method according to Embodiment 2 of this application. As shown in FIG. 8, the method includes the following steps.

**S801**: The terminal device sends, to the access network device 1, information used to request to resume an RRC connection, where an inactive-state paging cycle of the terminal device is a first paging cycle; and correspondingly, the access network device 1 receives the information used to request to resume the RRC connection.

For example, the terminal device may send an RRC resume request message to the access network device 1, where the RRC resume request message includes the information used to request to resume the RRC connection. In other words, the information used to request to resume the RRC connection may be carried in the RRC resume request message.

**S802**: The access network device 1 sends first information to the terminal device, where the first information is used to configure the inactive-state paging cycle of the terminal device as a second paging cycle; and correspondingly, the terminal device receives the first information.

Here, there are a plurality of manners in which the access network device 1 sends the first information to the terminal device. For example, the access network device 1 sends an RRC release message to the terminal device, where the RRC release message indicates that the terminal device is in the inactive state (or the RRC release message indicates the terminal device to enter the inactive state), and the RRC release message includes the first information. Correspondingly, after receiving the RRC release message, the terminal device may keep staying in the inactive state, and update the inactive-state paging cycle of the terminal device from the first paging cycle to the second paging cycle based on the first information.

**S803**: The access network device 1 sends second information to the core network element, where the second information is used to start, cancel, or modify a mobile terminated communication handling policy of the terminal device; and correspondingly, the core network element receives the second information.

Here, for a specific implementation of S803, refer to the descriptions of S703.

It may be understood that an execution sequence of S802 and S803 is not limited in this embodiment of this application.

### Embodiment 3

In Embodiment 3, another possible implementation procedure of Embodiment 1 is described by using a scenario in which "an access network device 1 is an access network device that last serves a terminal device, and the terminal device moves from coverage of the access network device 1 to coverage of an access network device 2" as an example.

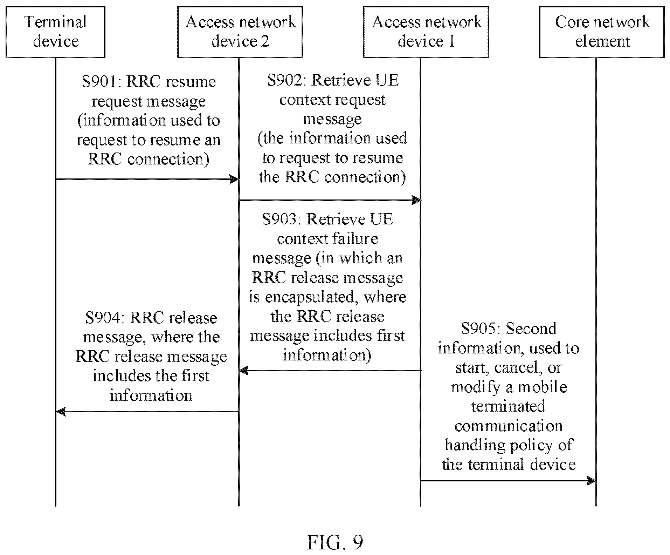

**FIG. 9** is a schematic flowchart corresponding to a communication method according to Embodiment 3 of this application. As shown in FIG. 9, the method includes the following steps.

**S901:** The terminal device sends, to the access network device 2, information used to request to resume an RRC connection, where an inactive-state paging cycle of the terminal device is a first paging cycle; and correspondingly, the access network device 2 receives the information used to request to resume the RRC connection.

For example, the terminal device may send an RRC resume request message to the access network device 2, where the RRC resume request message includes the information used to request to resume the RRC connection. For example, the information used to request to resume the RRC connection is an RRC resume cause value.

**S902**: The access network device 2 sends, to the access network device 1, the information that is received by the access network device 2 and that is used to request to resume the RRC connection; and correspondingly, the access network device 1 receives the information used to request to resume the RRC connection.

For example, the access network device 2 may send a retrieve UE context request message to the access network device 1, where the retrieve UE context request message includes the information used to request to resume the RRC connection, for example, the RRC resume cause value.

**S903**: If the access network device 1 determines not to perform anchor relocation, the access network device 1 sends a retrieve UE context failure message to the access network device 2, where the retrieve UE context failure message indicates that anchor relocation is not to be performed.

For example, an RRC release message may be encapsulated in the retrieve UE context failure message, the RRC release message indicates the terminal device to enter an inactive state, and the RRC release message includes first information. In other words, the first information is carried in the RRC release message.

It may be understood that an example in which the first information is carried in the RRC release message is used for description herein. The first information may alternatively be carried in another possible message. This is not specifically limited.

**S904:** After receiving the retrieve UE context failure message, the access network device 2 may obtain the RRC release message through decapsulation, and send the RRC release message to the terminal device; and correspondingly, after receiving the RRC release message, the terminal device may keep staying in the inactive state, and update the inactive-state paging cycle of the terminal device from the first paging cycle to a second paging cycle based on the first information.

**S905:** The access network device 1 sends second information to a core network element, where the second information is used to start, cancel, or modify a mobile terminated communication handling policy of the terminal device; and correspondingly, the core network element receives the second information.

Here, for a specific implementation of S905, refer to the descriptions of S703.

It may be understood that an execution sequence of S905 and S903 is not limited in this embodiment of this application.

According to the foregoing method, when the terminal device initiates an RRC resume procedure, the access network device 1 may configure the inactive-state paging cycle for the terminal device, and send the second information to the core network element without performing anchor relocation, to notify the core network element to update (or start, modify, or cancel) the mobile terminated communication handling policy of the terminal device. In this way, the terminal device and the core network element can align updates of the inactive-state paging cycle of the terminal device without the terminal device entering a connected state.

### Embodiment 4

In Embodiment 4, another possible implementation procedure of Embodiment 1 is described by using a scenario in which "an access network device 1 is an access network device that last serves a terminal device, and the terminal device moves from coverage of the access network device 1 to coverage of an access network device 2" as an example.

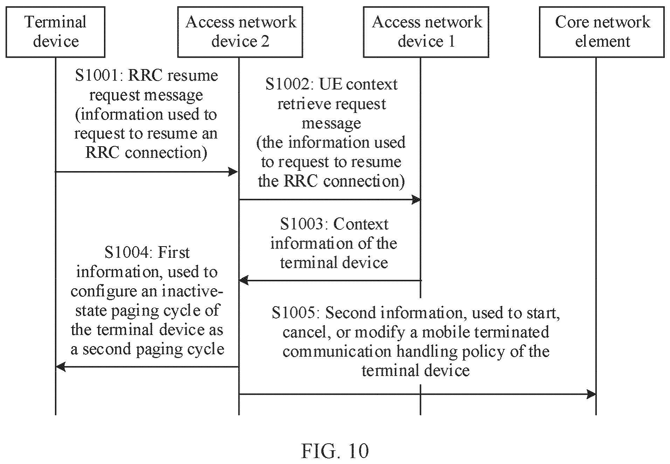

**FIG. 10** is a schematic flowchart corresponding to a communication method according to Embodiment 4 of this application. As shown in FIG. 10, the method includes the following steps.

**S1001:** The terminal device sends, to the access network device 2, information used to request to resume an RRC connection, where an inactive-state paging cycle of the terminal device is a first paging cycle; and correspondingly, the access network device 2 receives the information used to request to resume the RRC connection.

Here, for a specific implementation of S1001, refer to the descriptions of S901.

**S1002:** The access network device 2 sends, to the access network device 1, the information used to request to resume the RRC connection; and correspondingly, the access network device 1 receives the information used to request to resume the RRC connection.

For example, the access network device 2 may send a retrieve UE context request message to the access network device 1, where the retrieve UE context request message includes the information used to request to resume the RRC connection.

**S1003:** The access network device 1 sends context information of the terminal device to the access network device 2.

Here, if the access network device 1 determines to perform anchor relocation, the access network device 1 sends the context information of the terminal device to the access network device 2.

For example, the access network device 1 may send a retrieve UE context response message to the access network device 2, where the retrieve UE context response message includes the context information of the terminal device.

Optionally, the access network device 1 may further send third information to the access network device 2, where the third information indicates the first paging cycle, or indicates whether the first paging cycle is greater than a threshold (that is, indicates whether a mobile terminated communication handling policy of the terminal device is started). The first paging cycle may be configured by the access network device 1 for the terminal device. The third information may be carried in the retrieve UE context response message, or may be carried in another message. This is not specifically limited.

For "the third indication information indicates whether the first paging cycle is greater than the threshold", in an example, the third information may include one bit. When a value of the bit is 1, it indicates that the first paging cycle is greater than the threshold. When the value of the bit is 0, it indicates that the first paging cycle is less than or equal to the threshold. Alternatively, an implicit indication method may be used. For example, when the first paging cycle is greater than the threshold, the access network device 1 sends the third information to the access network device 2. When the first paging cycle is less than or equal to the threshold, the access network device 1 does not send the third information to the access network device 2.

**S1004:** The access network device 2 sends first information to the terminal device, where the first information is used to configure the inactive-state paging cycle of the terminal device as a second paging cycle; and correspondingly, the terminal device receives the first information.

Here, there are a plurality of manners in which the access network device 2 sends the first information to the terminal device. For example, the access network device 2 sends an RRC release message to the terminal device, where the RRC release message indicates that the terminal device is in an inactive state, and the RRC release message includes the first information. Correspondingly, after receiving the RRC release message, the terminal device may keep staying in the inactive state, and update the inactive-state paging cycle of the terminal device from the first paging cycle to the second paging cycle based on the first information.

**S1005**: The access network device 2 sends second information to a core network element, where the second information is used to start, cancel, or modify a mobile terminated communication handling policy of the terminal device; and correspondingly, the core network element receives the second information.

For example, the second information may include the second paging cycle and/or indication information, and the indication information indicates an operation on the communication handling policy. The operation on the communication handling policy includes starting, canceling, or modifying.

In a possible implementation, the access network device 2 may send the second information to the core network element based on the third information and the second paging cycle. For a specific implementation, refer to the descriptions of "the first access network device sends the second information to the core network element based on the first paging cycle and the second paging cycle" in Embodiment 1.

In another possible implementation, the access network device 2 may directly send the second information to the core network element (that is, the access network device 2 does not need to pay attention to values of the first paging cycle and the second paging cycle). In this case, the second information may include the second paging cycle (excluding the indication information). For details, refer to the descriptions of "the first access network device directly sends the second information to the core network element" in Embodiment 1. In this case, the access network device 1 may not need to send the third information to the access network device 2.

In addition, there are a plurality of implementations in which the access network device 2 sends the second information to the core network element. For example, the access network device 2 may send the second information to the core network element by reusing the request message a1 in FIG. 5 or the request message b1 in FIG. 6. In other words, the second information may be carried in the request message a1 or the request message b1. Alternatively, the access network device 2 may send the second information to the core network element by reusing a path switch request message, that is, the second information may be carried in the path switch request message.

It may be understood that an execution sequence of S1005, S1003, and S1004 is not limited in embodiments of this application.

According to the foregoing method, when the terminal device initiates an RRC resume procedure, if the access network device 1 performs anchor relocation, the access network device 2 may configure the inactive-state paging cycle for the terminal device, and send the second information to the core network element, to notify the core network element to update (or start, modify, or cancel) the mobile terminated communication handling policy of the terminal device. In this way, the terminal device and the core network element can align updates of the inactive-state paging cycle of the terminal device without the terminal device entering a connected state.

### Embodiment 5

In Embodiment 5, a scenario in which "an access network device 1 is an access network device that last serves a terminal device, and the terminal device moves from coverage of the access network device 1 to coverage of an access network device 2" is used as an example for description.

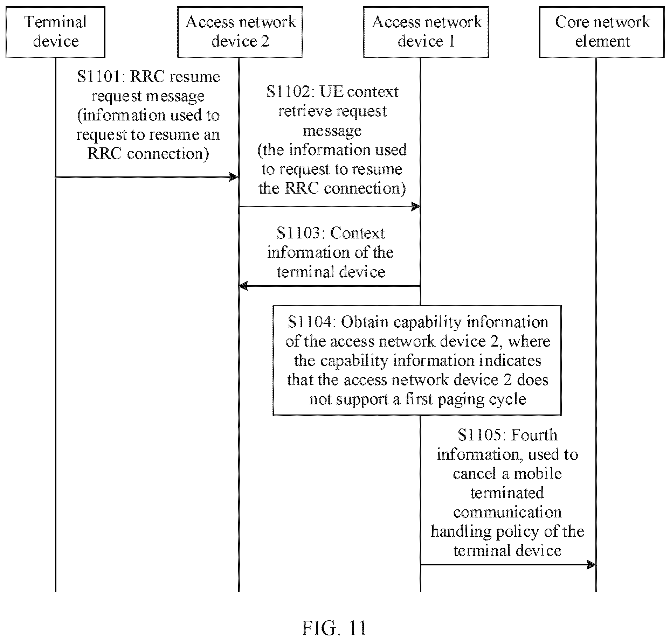

**FIG. 11** is a schematic flowchart corresponding to a communication method according to Embodiment 5 of this application. As shown in FIG. 11, the method includes the following steps.

**S1101:** The terminal device sends, to the access network device 2, information used to request to resume an RRC connection, where an inactive-state paging cycle of the terminal device is a first paging cycle, and the first paging cycle is greater than a threshold; and correspondingly, the access network device 2 receives the information used to request to resume the RRC connection.

Here, for a specific implementation of S1101, refer to the descriptions of S901.

The first paging cycle may be configured by the access network device 1 for the terminal device. Because the first paging cycle is greater than the threshold, before S1101, the access network device 1 may notify a core network element to start a mobile terminated communication handling policy of the terminal device.

**S1102:** The access network device 2 sends, to the access network device 1, the information used to request to resume the RRC connection; and correspondingly, the access network device 1 receives the information used to request to resume the RRC connection.

For example, the access network device 2 may send a retrieve UE context request message to the access network device 1, where the retrieve UE context request message includes the information used to request to resume the RRC connection.

It may be understood that S1101 and S1102 are optional steps.

**S1103:** The access network device 1 sends context information of the terminal device to the access network device 2.

Here, if the access network device 1 determines to perform anchor relocation, the access network device 1 may send the context information of the terminal device to the access network device 2. For example, the access network device 1 sends a retrieve UE context response message to the access network device 2, where the retrieve UE context response message includes the context information of the terminal device.

**S1104:** The access network device 1 obtains capability information of the access network device 2, where the capability information indicates that the access network device 2 does not support the first paging cycle (or does not support enhanced INACTIVE eDRX).

Here, there may be a plurality of implementations in which the access network device 1 obtains the capability information of the access network device 2. For example, the access network device 2 may send the capability information to the access network device 1 through an Xn interface. The access network device 2 may actively send the capability information to the access network device 1, or may send the capability information to the access network device 1 based on a request of the access network device 1.

**S1105:** The access network device 1 sends fourth information to the core network element, where the fourth information is used to cancel the mobile terminated communication handling policy of the terminal device; and correspondingly, the core network element receives the fourth information.

According to the foregoing method, when the terminal device initiates an RRC resume procedure, if the access network device 1 configures the enhanced INACTIVE eDRX for the terminal device (that is, the core network element starts the mobile terminated communication handling policy of the terminal device), after the access network device 1 performs anchor relocation, if the access network device 2 does not support the enhanced INACTIVE eDRX (that is, the access network device 2 configures, for the terminal device, an inactive-state paging cycle less than or equal to the threshold), the access network device 1 may send the fourth information to the core network element, to cancel the mobile terminated communication handling policy of the terminal device. In this way, the terminal device and the core network element can align updates of the inactive-state paging cycle of the terminal device without the terminal device entering a connected state.

### Embodiment 6

In Embodiment 6, a scenario in which "an access network device 1 is an access network device that last serves a terminal device, and the terminal device moves from coverage of the access network device 1 to coverage of an access network device 2" is used as an example for description.

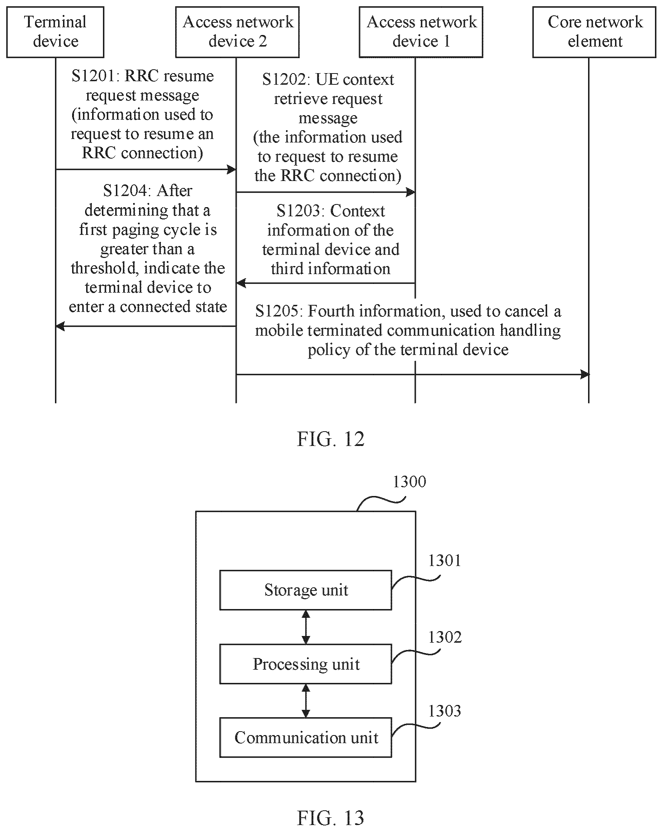

**FIG. 12** is a schematic flowchart corresponding to a communication method according to Embodiment 6 of this application. As shown in FIG. 12, the method includes the following steps.

**S1201:** The terminal device sends, to the access network device 2, information used to request to resume an RRC connection, where an inactive-state paging cycle of the terminal device is a first paging cycle; and correspondingly, the access network device 2 receives the information used to request to resume the RRC connection.

Here, for a specific implementation of S1201, refer to the descriptions of S901.

**S1202**: The access network device 2 sends, to the access network device 1, the information used to request to resume the RRC connection; and correspondingly, the access network device 1 receives the information used to request to resume the RRC connection.

For example, the access network device 2 may send a retrieve UE context request message to the access network device 1, where the retrieve UE context request message includes the information used to request to resume the RRC connection.

It may be understood that S1201 and S1202 are optional steps.

**S1203**: The access network device 1 sends third information to the access network device 2, where the third information indicates the first paging cycle, or indicates whether the first paging cycle is greater than a threshold.

Here, if the access network device 1 determines to perform anchor relocation, the access network device 1 may send the third information to the access network device 2, and optionally, further send context information of the terminal device to the access network device 2.

For example, the access network device 1 may send a retrieve UE context response message to the access network device 2, where the retrieve UE context response message includes the context information of the terminal device and the third information.

**S1204**: After determining, based on the third information, that the first paging cycle is greater than the threshold, the access network device 2 indicates the terminal device to enter a connected state.

Here, the access network device 2 may send an RRC resume message to the terminal device, where the RRC resume message indicates the terminal device to resume the RRC connection or enter the connected state.

It may be understood that S1204 may alternatively be replaced with "after determining, based on the third information, that the first paging cycle is greater than the threshold, the access network device 2 indicates the terminal device to enter an idle state".

**S1205**: The access network device 2 sends fourth information to a core network element, where the fourth information is used to cancel a mobile terminated communication handling policy of the terminal device; and correspondingly, the core network element receives the fourth information.

Optionally, if the access network device 2 indicates the terminal device to enter the connected state in S1204, after S1205, the access network device 2 may configure enhanced INACTIVE eDRX for the terminal device by using the procedure shown in FIG. 5, and notify the core network element to start the mobile terminated communication handling policy of the terminal device.

Optionally, if the access network device 2 indicates the terminal device to enter the idle state in S1204, the fourth information in S1205 may be a UE context release request. In other words, the fourth information is further used to request the core network element to release an NG connection associated with the terminal device, and mark the terminal device as a connection management idle state.

According to the foregoing method, when the terminal device initiates an RRC resume procedure, if the access network device 1 configures the enhanced INACTIVE eDRX for the terminal device, after the access network device 1 performs anchor relocation, the access network device 1 may send the third information to the access network device 2, and then the access network device 2 may indicate based on the third information, when the first paging cycle is greater than the threshold, the terminal device to enter the connected state (or the idle state), so that the terminal device and the core network element align updates of the inactive-state paging cycle of the terminal device.

In addition, if the access network device 2 determines that the first paging cycle is less than or equal to the threshold, the access network device 2 may not need to indicate the terminal device to enter the connected state (or the idle state). This reduces transmission resource overheads. For example, after the access network device 2 determines that the first paging cycle is less than or equal to the threshold, if the inactive-state paging cycle (namely, a second paging cycle) configured by the access network device 2 for the terminal device is greater than the threshold, the access network device 2 may notify the core network element. In this way, the core network element starts the mobile terminated communication handling policy of the terminal device. If the second paging cycle is less than or equal to the threshold, the core network element may not need to be notified.

It may be understood that the method in Embodiment 6 is also applicable to a scenario in which "the access network device 1 is an access network device that last serves the terminal device, and the terminal device in an inactive state is currently located in the coverage of the access network device 1". In this case, when the first paging cycle is greater than the threshold, the access network device 1 may indicate the terminal device to enter the connected state (or the idle state), and notify the core network element to cancel the mobile terminated communication handling policy of the terminal device. In addition, when the first paging cycle is less than or equal to the threshold, the access network device 1 may not need to indicate the terminal device to enter the connected state (or the idle state).

For Embodiment 1 to Embodiment 6 above, it may be understood as follows:
(1) Step numbers in the flowcharts described in Embodiment 1 to Embodiment 6 are merely an example of an execution procedure, and do not constitute a limitation on an execution sequence of the steps. In embodiments of this application, there is no strict execution sequence between steps that do not have a time sequence dependency relationship with each other. Not all steps shown in each flowchart are necessarily performed steps; and some steps may be deleted based on each flowchart according to an actual requirement, or other possible steps may be added based on each flowchart according to an actual requirement.
(2) The foregoing focuses on differences between different embodiments in Embodiment 1 to Embodiment 6, and Embodiment 1 to Embodiment 6 may refer to each other except for other content of the differences. In addition, in a same embodiment, different implementations or different examples may also refer to each other.

The foregoing mainly describes the solutions provided in embodiments of this application from a perspective of interaction between a device and a network element. It may be understood that, to implement the foregoing functions, an access network device may include a corresponding hardware structure and/or a software module for implementing the functions. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the access network device may be divided into function units based on the foregoing method examples, for example, each function unit may be obtained through division based on each corresponding function, or two or more functions may be integrated into one unit. The integrated unit may be implemented in a form of hardware, or may be implemented in a form of a software function unit.

When an integrated unit is used, FIG. 13 is a possible example block diagram of an apparatus according to an embodiment of this application. As shown in FIG. 13, the apparatus 1300 may include a processing unit 1302 and a communication unit 1303. The processing unit 1302 is configured to control and manage an action of the apparatus 1300. The communication unit 1303 is configured to support communication between the apparatus 1300 and another device. Optionally, the communication unit 1303 is also referred to as a transceiver unit (or a transceiver), and may include a receiving unit and/or a sending unit, respectively configured to perform a receiving operation and a sending operation. The apparatus 1300 may further include a storage unit 1301, configured to store program code and/or data of the apparatus 1300.

The apparatus 1300 may be the access network device (for example, the access network device 1 or the access network device 2) in the foregoing embodiments, or may be a component (for example, a circuit or a chip) disposed in the access network device. The processing unit 1302 may support the apparatus 1300 in performing actions of the access network device in the foregoing method examples. Alternatively, the processing unit 1302 mainly performs internal actions of the access network device in the method examples, and the communication unit 1303 may support communication between the apparatus 1300 and another device.

For example, in an embodiment, the communication unit 1303 is configured to: receive, from a terminal device, information used to request to resume a radio resource control RRC connection, where an inactive-state paging cycle of the terminal device is a first paging cycle; send first information to the terminal device or a second access network device, where the first information is used to configure the inactive-state paging cycle of the terminal device as a second paging cycle; and send second information to a core network element, where the second information is used to start, cancel, or modify a mobile terminated communication handling policy of the terminal device.

Optionally, the communication unit 1303 is further configured to receive third information from a third access network device, where the third information indicates the first paging cycle, or indicates that the first paging cycle is greater than a threshold.

In another embodiment, the communication unit 1303 is configured to: send context information of a terminal device in an inactive state to a second access network device, where an inactive-state paging cycle of the terminal device is greater than a threshold; obtain capability information of the second access network device, where the capability information indicates that the second access network device does not support the paging cycle; and send fourth information to a core network element, where the fourth information indicates to cancel a mobile terminated communication handling policy of the terminal device.

In another embodiment, the communication unit 1303 is configured to: receive third information from a second access network device, where the third information indicates an inactive-state paging cycle of the terminal device, or indicates that the paging cycle is greater than a threshold; and indicate, based on the third information, the terminal device to enter a connected state.

It should be understood that division into units in the apparatus is merely logical function division. During actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units are implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form of software invoked by a processing element.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For another example, the units may be integrated and implemented in a form of a system-on-a-chip (system-on-a-chip, SOC).

The foregoing unit configured for receiving is an interface circuit of the apparatus, and is configured to receive a signal from another apparatus. For example, when the apparatus is implemented by a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented by a chip, the sending unit is an interface circuit that is of the chip and that is configured to send a signal to another chip or apparatus.

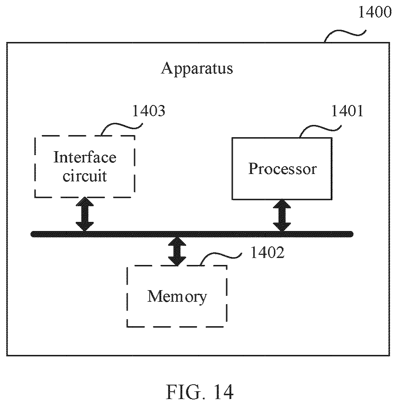

FIG. 14 is a diagram of a structure of an apparatus according to an embodiment of this application. The apparatus 1400 may be the access network device in the foregoing embodiments, and is configured to implement a function of the access network device in the foregoing embodiments.

As shown in FIG. 14, the apparatus 1400 may include a processor 1401, a memory 1402, and an interface circuit 1403. The processor 1401 may be configured to: process a communication protocol and communication data, and control the apparatus 1400. The memory 1402 may be configured to store a program and data. The processor 1401 may perform, based on the program, the method performed by the apparatus 1400 in embodiments of this application. The interface circuit 1403 may be used by the apparatus 1400 to communicate with another device, and the communication may be wired communication or wireless communication.

Alternatively, the memory 1402 may be externally connected to the apparatus 1400. In this case, the apparatus 1400 may include the interface circuit 1403 and the processor 1401. The interface circuit 1403 may alternatively be externally connected to the apparatus 1400. In this case, the apparatus 1400 may include the memory 1402 and the processor 1401. When both the interface circuit 1403 and the memory 1402 are externally connected to the apparatus 1400, the apparatus 1400 may include the processor 1401.

The apparatus 1400 shown in FIG. 14 can implement processes related to the access network device in the foregoing method embodiments. Operations and/or functions of modules in the apparatus 1400 shown in FIG. 14 are respectively intended to implement corresponding procedures in the foregoing method embodiments. For details, refer to the descriptions in the foregoing method embodiments. To avoid repetition, detailed descriptions are appropriately omitted herein.

The terms "system" and "network" may be used interchangeably in embodiments of this application. "At least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, a priority, or importance of the plurality of objects.

A person skilled in the art should understand that embodiments of this application may be provided as a method, a system, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

It is clearly that a person skilled in the art can make various modifications and variations to this application without departing from the spirit and scope of this application. In this way, this application is intended to cover these modifications and variations of this application provided that they fall within the scope of protection defined by the following claims and their equivalent technologies.

## Claims

1. A communication method, wherein the method is applied to a first access network device, and the method comprises:
receiving, from a terminal device, information used to request to resume a radio resource control RRC connection, wherein an inactive-state paging cycle of the terminal device is a first paging cycle; and
sending first information to the terminal device or a second access network device, wherein the first information is used to configure the inactive-state paging cycle of the terminal device as a second paging cycle; and sending second information to a core network element, wherein the second information is used to start, cancel, or modify a mobile terminated communication handling policy of the terminal device.

2. The method according to claim 1, wherein the information used to request to resume the RRC connection is an RRC resume cause value, and the RRC resume cause value indicates a radio access network RAN-based notification area update.

3. The method according to claim 1 or 2, wherein the method further comprises:
receiving third information from a third access network device, wherein the third information indicates the first paging cycle, or indicates that the first paging cycle is greater than a threshold; or
sending an RRC release message to the terminal device, wherein the RRC release message indicates the terminal device to enter an inactive state, and the RRC release message comprises the first paging cycle.

4. The method according to any one of claims 1 to 3, wherein the first information is carried in an RRC release message, and the RRC release message indicates that the terminal device is in the inactive state.

5. The method according to any one of claims 1 to 4, wherein the second information is carried in a path switch request message.

6. The method according to any one of claims 1 to 5, wherein when the first paging cycle is less than or equal to a threshold, and the second paging cycle is greater than the threshold, the second information is used to start the mobile terminated communication handling policy of the terminal device.

7. The method according to any one of claims 1 to 5, wherein when the first paging cycle is greater than the threshold, the second information is used to cancel the mobile terminated communication handling policy of the terminal device.

8. The method according to any one of claims 1 to 5, wherein when the first paging cycle is greater than the threshold, and the second paging cycle is greater than the threshold, the second information is used to restart the mobile terminated communication handling policy of the terminal device.

9. The method according to any one of claims 3 to 8, wherein the threshold is 10.24 seconds.

10. The method according to any one of claims 1 to 9, wherein the second information comprises the second paging cycle and/or indication information, wherein
the indication information indicates an operation on the communication handling policy, and the operation comprises starting, canceling, or modifying.

11. A communication method, wherein the method is applied to a first access network device, and the method comprises:
sending context information of a terminal device in an inactive state to a second access network device, wherein an inactive-state paging cycle of the terminal device is greater than a threshold;
obtaining capability information of the second access network device, wherein the capability information indicates that the second access network device does not support the paging cycle; and
sending fourth information to a core network element, wherein the fourth information indicates to cancel a mobile terminated communication handling policy of the terminal device.

12. The method according to claim 11, wherein obtaining the capability information of the second access network device comprises:
receiving the capability information from the second access network device.

13. A communication apparatus, comprising a module configured to perform the method according to any one of claims 1 to 12.

14. A communication apparatus, comprising a processor, wherein the processor is coupled to a memory, and the memory stores a computer program; and the processor is configured to invoke the computer program in the memory, to enable the communication apparatus to perform the method according to any one of claims 1 to 12.

15. A computer-readable storage medium, wherein the storage medium stores a computer program or instructions, and when the computer program or the instructions are executed by a computer, the method according to any one of claims 1 to 12 is implemented.

16. A computer program product, wherein when a computer reads and executes the computer program product, the computer is enabled to perform the method according to any one of claims 1 to 12.
